# EUROPEAN PATENT SPECIFICATION

(11) **EP 3 953 626 B1**
(45) Date of publication and mention of the grant of the patent: **09.08.2023**
(21) Application number: 20727914.2
(22) Date of filing: 03.04.2020
(51) Int. Cl.: F16L 1/09

(54) **A TOOL FOR ASSEMBLY AND DISASSEMBLY OF PIPE SEGMENTS**
WERKZEUG ZUR MONTAGE UND DEMONTAGE VON ROHRSEGMENTEN
OUTIL POUR L'ASSEMBLAGE ET LE DÉSASSEMBLAGE DE SEGMENTS DE TUYAU

(30) Priority: 11.04.2019 DK PA201900451
(43) Date of publication of application: 16.02.2022
(73) Proprietor: Tonni, Svarre, 4390 Maribo (DK)
(72) Inventor: TONNI, Svarre, 4930 Maribo (DK)
(74) Representative: Skov, Anders
(86) International application number: PCT/DK2020/050090
(87) International publication number: WO 2020/207545

(56) References cited:
- EP-A1- 2 062 689
- KR-A- 20100 119 463

## Description

### Field of the invention

The present invention relates in a first aspect to a tool for use in assembling and disassembling of pipe segments. In a second aspect the present invention relates to a system comprising a tool according to the first aspect in combination with a pipe holder. In a third aspect the disclosure, beyond the scope of the invention describes a pipe holder as defined in respect of the second aspect of the invention. In a fourth aspect the present invention relates to the use of tool according to the first aspect of the invention, or of a system according to the second aspect of the invention in the operation of assembling and disassembling of pipes or pipe segments.

### Background of the invention

In most civilized parts of the world in areas where a relative high population is present municipal authorities have for around a century provided for sewage systems allowing disposing any sewage from households and industry from the premises thereof into a pipeline system so that the sewage is carried away from its origin, preferably to a sewage cleaning facility. In a sewage cleaning facility, the sewage is subjected to various mechanical, biological and/or chemical treatments. Hereby organic matter in the sewage will be digested by bacteria and furthermore, the treatments provide for removal of sediments so that a relatively clean and non-hazardous effluent can be disposed off, by leading it into lakes, rivers, streams or into the sea.

The sewage system comprises an array of pipelines. Following the direction of flow of sewage, the pipeline starts at a household or an industry at the premises thereof. The pipeline is typically dug into the ground at a depth of up to 6 meters, typically at a depth of approximately 1-2 meters. From the premises the pipeline extends to an area outside the premise where it is connected to a major pipeline leading to the sewage cleaning facility. The major pipeline is also dug into the ground, typically along the direction of streets, roads or pavements,

As many households are being connected to the major pipeline along the extension thereof, obviously the major pipeline must be able to cope with a considerably larger flow capacity of sewage, compared to the pipes connecting individual households or industries to that major pipeline.

Accordingly, whereas under the construction of sewage systems, the major pipelines are handled using machinery, such as tractors, trenchers and the like, the pipelines originating from individual households and small industries, and leading to the major pipeline, are typically handled manually by workers in the operation of the assembling and disassembling thereof. Such pipelines being handled manually typically have an outer diameter of Ø: 110 or above, such as Ø: 110 - 160 mm.

These smaller pipelines are usually assembled by bringing together separate pipe segments, where each segment comprises a first cylindrical end and a second, opposite end comprising a collar or a sleeve having, in a radial direction, a larger diameter, compared to the diameter of the first end of the pipe segment so that the inner diameter of the collar or sleeve corresponds to the outer diameter of first end of the pipe. In this way a number of pipe segments can be assembled by joining together a first end (having a cylindric end) of a first pipe segment with the second end (comprising a collar or sleeve) of another pipe segment.

As already mentioned, the pipelines are typically being dug into the ground. Therefore, before any sewage pipeline can be established, a trench must be dug on the premises, along the trajectory of the intended pipeline.

Traditionally, workers are constructing pipelines by manually assembling the above-mentioned pipe segments using manual labor, such as by pressing and hammering the pipes together in order to secure that no leaks or at least a minimum of leaks in the joints will result.

Moreover, in the operation of disassembling such pipe segments, for example for the purpose of renovating an existing sewage system the workers often encounter problems in disassembly the individual segments due to seizure after many years of presence in the soil.

Accordingly, the labor involved in assembling and disassembling pipe segments for use in sewage systems is highly physical demanding, ergonomically unhealthy and therefor poses problems.

FR 2 168 734 discloses a tool for aiding in assembly of the pipe segments disclosed above. The tool comprises a ladder structure having an upper end acting as a handle and a lower end to be inserted into the soil, the ladder structure comprises two vertical bars which are to be placed on either side of a first pipe segment. Between the two vertical bars is arranged a protrusion to which a rope can be fastened. In the other end of the rope is formed a loop. The loop is arranged around a second pipe segment. When the rope has been tightened by arranging the loop at a proper distance to the ladder structure, the second pipe segment can be pulled towards the first pipe segment by levering the ladder structure in a direction away from the second pipe segment. The tool disclosed in FR 2 168 734 also provides for adjustment of the mutual distance between the two vertical bars, thereby allowing adaptation of the tool to different diameters of pipe segments.

Although the tool disclosed in FR 2 168 734 provides some advantages in the handling of pipe segments, the tool nevertheless presents some disadvantages.

These disadvantages relate to the fact that with the tool disclosed in FR 2 168 734 it is only possible to move the pipe segment being surrounded by the loop of the rope. And only movement towards the tool itself is possible. Accordingly, the tool disclosed in FR 2 168 734 does not allow movement of the pipe segment around which the ladder structure is arranged. Nor does this tool allow movement by pushing away the pipe segment around which the rope loop is arranged. These limitations of the tool disclosed in FR 2 168 734 may be relevant in situation where limited access is provided in the vicinity of the pipe segments, such as at near the foundation of a house, where the interconnected pipe segments transit from being arranged below the house to being arranged in soil outside the house.

US 5,640,748 discloses another type of pipe assembling apparatus. The apparatus disclosed herein comprises a first portion and a second portion. The first portion comprises a handle splitting into two vertically downward extending side members intended for being dug into the ground. Adjustment means allows for adjustment of the mutual distance between these side members. The second portion is connected to the first portion and comprises two horizontally extending members configured to be arranged above and below a pipe, respectively. Adjustment means are provided to enable adjustment of the mutual distance between these horizontally extending members. Although adjustment means are provided for adjustment of the mutual distance between two vertically downward extending side members on the one hand and between the horizontally extending members on the other hand, these adjustment means do not provide for squeezing the pipe and thereby to obtain a tight grip of the pipe during handling thereof.

KR 2010 0119463 A discloses an apparatus for joining together to pipe segments. The apparatus comprises a first collar to be mounted around a first pipe segment and a second collar to be mounted around another pipe segment. Both collars are coupled to a lever and a gear mechanism allows movement of the one collar in relation to the second collar. The apparatus disclosed in KR 2010 0119463 A is intended for bringing together or for disassembling, in an axial direction, the ends of two pipe segments. The apparatus disclosed in KR 2010 0119463 A is not suitable for handling pipe segments in a more general sense.

EP 2 062 689 A1 discloses a device for disassembly and assembling of pipe segments. The device comprises two frames. Each frame comprises two rollers which are arranged at a distance so that a pipe segment can be arranged between the rollers. A winch allows for bringing together or separating an upper part of the two frames. Hereby two pipe segments, each being arranged between the rollers of a frame, can either be brought together or separated. Neither the apparatus disclosed EP 2 062 689 A1 is suitable for handling pipe segments in a more general sense.

Hence, there is a need for an improved pipe handling tool which overcomes these disadvantages.

It is an object of the present invention to provide a tool for assembling and disassembling pipe segments which overcomes the above-identified disadvantages.

### Brief description of the invention

This object is fulfilled by the present in its various aspects.

Accordingly, the present invention relates in a first aspect to a tool for assembling and disassembling pipe segments, wherein said tool in the orientation intended during use comprising:
an elongate shaft having an upper end and a lower end;
wherein said lower end of said shaft is being connected to a fork portion;
wherein said fork portion comprises a fork base;
wherein a first fork element extends in a downward direction from said fork base, at a first side thereof; said first fork element comprises an upper end and a lower end;
wherein a second fork element extends in a downward direction from said fork base, at a second side thereof; said second fork element comprises an upper end and a lower end;
wherein said fork portion comprising adjustment means for adjusting the mutual distance between said first fork element and said second fork element;
characterized in that said adjustment means comprises:
   a slit;
   a first toothed rack,
   a second toothed rack, and
   a sprocket;
wherein said fork base comprises said slit at a lower portion thereof and extending in a longitudinal direction thereof; and wherein said first fork element being connected to said first toothed rack, said first toothed rack being configured to be able to slide in said slit; wherein said second fork element being connected to said second toothed rack, said second toothed rack being configured to be able to slide in said slit; wherein said shaft being pivotally connected to said fork base and being rigidly connected to said sprocket; said sprocket being arranged in said slit; wherein said sprocket is configured for engaging with said first toothed rack and said second toothed rack;
thereby allowing translating a rotation of said shaft, in a first or second rotational direction, into an increase or a decrease of the mutual distance between said first fork element and said second fork element.

In a second aspect the present invention relates to a system for assembling and disassembling pipe segments, said system comprises a tool in combination with a pipe holder, said pipe holder in the orientation intended during use comprises:
a first jaw;
a second jaw;
an elongate pipe holder shaft;

wherein said first jaw and said second jaw are having a concave inner surface;
wherein said first jaw and said second jaw are being pivotally suspended in relation to each other around a pivot axis;
wherein said first jaw and said second jaw comprises a protrusion, at an upper end thereof, protruding in an upward direction;
wherein said pipe holder shaft comprising an upper end and a lower end;
wherein said pipe holder shaft, at a lower end thereof is being pivotally suspended relative to said first jaw and said second jaw;
wherein said pipe holder shaft, at a lower end thereof comprises a jaw engagement element;
wherein said jaw engagement element is configured to engage with said protrusion of said first jaw and said second jaw, respectively, at an engagement surface thereof; thereby enabling, by rotation of said pipe holder shaft, to shift the configuration of said pipe holder between a clamping configuration in which the first jaw and second jaw are relatively close to each other, and an open configuration, wherein the first jaw and second jaw are relatively distant to each other.

In a third aspect, not forming part of the invention, the disclosure describes a pipe holder wherein said pipe holder is comprising the combination of features as defined in respect of the second aspect of the present invention.

In a fourth aspect the present invention relates to a use of a tool according to the first aspect of the present invention or of a system according to the second aspect of the present invention in the operation of assembling or disassembling pipes, such as pipe segments.

The present invention in its various aspects provide for aiding the operation of assembling and disassembling pipe segments, such as sewer pipe segments being located in a trench in soil. The tool and the system according to the first and the second aspect of the present invention, respectively, allows better handling of pipe or pipe segments in the operation of assembling or disassembling of these. Moreover, during such operations, the present invention in its various aspects allows an ergonomically healthier position of the body of a worker handling these pipes or pipe segments.

Accordingly, the pipes located in a trench may be handled with the tool and the pipe holder of the present invention by a worker while standing on the ground at a level corresponding to the brim of the trench. The tool and the pipe holder of the invention allows for twisting, moving and picking up and lifting pipes and pipe segments.

### Brief description of the figures

Fig. 1 is a perspective view illustrating one embodiment of the tool of the first aspect of the present invention.
Fig. 2 is a perspective view illustrating in close-up details of one embodiment of the tool of the first aspect of the present invention.
Fig. 3 is a bottom plan view illustrating the principle of the adjustment means of the tool of the first aspect of the invention.
Fig. 4 is an exploded view illustrating the principle of the adjustment means of the tool of the first aspect of the invention.
Fig. 5a is a front view illustrating an embodiment of the pipe holder according to the third aspect, which does not form part of the present invention.
Fig. 5b is an exploded view illustrating the pipe holder of fig. 5a
Fig. 6 is a perspective view illustrating the pipe holder of fig. 5a and 5b in a working operation.
Fig. 7 is a perspective view illustrating the pipe holder of fig. 5a in a working operation in combination with the tool of fig. 1.

### Detailed description of the invention

### The first aspect of the present invention

The present invention relates in a first aspect to a tool for assembling and disassembling pipe segments, wherein said tool in the orientation intended during use comprising:
an elongate shaft having an upper end and a lower end;
wherein said lower end of said shaft is being connected to a fork portion;
wherein said fork portion comprises a fork base;
wherein a first fork element extends in a downward direction from said fork base, at a first side thereof; said first fork element comprises an upper end and a lower end;
wherein a second fork element extends in a downward direction from said fork base, at a second side thereof; said second fork element comprises an upper end and a lower end;
wherein said fork portion comprising adjustment means for adjusting the mutual distance between said first fork element and said second fork element;
characterized in that said adjustment means comprises:
   a slit;
   a first toothed rack,
   a second toothed rack, and
   a sprocket;
wherein said fork base comprises said slit at a lower portion thereof and extending in a longitudinal direction thereof; and wherein said first fork element being connected to said first toothed rack, said first toothed rack being configured to be able to slide in said slit; wherein said second fork element being connected to said second toothed rack, said second toothed rack being configured to be able to slide in said slit; wherein said shaft being pivotally connected to said fork base and being rigidly connected to said sprocket; said sprocket being arranged in said slit; wherein said sprocket is configured for engaging with said first toothed rack and said second toothed rack;
thereby allowing translating a rotation of said shaft, in a first or second rotational direction, into an increase or a decrease of the mutual distance between said first fork element and said second fork element.

In an embodiment of the tool according to the first aspect of the present invention a lower end of one or both of said fork elements comprising a wing portion, said wing portion extending in a plane defined by said first fork element and said second fork element.

In an embodiment of the tool according to the first aspect of the present invention one or both of the fork elements is/are being hollow and wherein each hollow fork element accommodates an auxiliary fork element, wherein each an auxiliary fork element is configured for being able to slide and lock into one of two or more predetermined positions in relation to its corresponding fork element, and wherein said wing portion is being arranged at a lower end of said an auxiliary fork element.

Each fork element may be provided with locking means for locking said auxiliary fork element to its corresponding fork element.

Such locking means may comprise a through-going treaded hole in said fork element in combination with a screw, such as a wing screw for being screwed into said treaded hole and thereby lock said auxiliary fork element to its corresponding fork element.

In an embodiment of the tool according to the first aspect of the present invention the area of the wing portion of the one or two fork elements, in that plane, amounts to 5 - 200 cm², such as 10 - 175 cm², for example 15 - 150 cm², such as 20 - 125 cm², e.g. 25 - 100 cm², such as 50 - 75 cm².

Providing the lower part of one or each of the fork elements with wing portions improves resistance against soil when relatively strong forces are applied to the tool.

In an embodiment of the tool according to the first aspect of the present invention the first fork element and/or the second fork element, at an inner surface thereof, facing the other fork element, comprises one or more pads for providing increased friction against the outer surface of a pipe segment.

In an embodiment of the tool according to the first aspect of the present invention the pad(s) is/are being made of metal or a polymer, such as rubber.

As mentioned, such pads provides improved grip against the surface of a pipe segment.

In an embodiment of the tool according to the first aspect of the present invention the shaft comprises extension means, such as a telescopic extension means being able to shift the length of said shaft between a relative short length and a relative long length and vice versa.

Such feature improves flexibility of the tool during use and hence also improves ergonomics of the tool.

In an embodiment of the tool according to the first aspect of the present invention the tool is configured for assembly and disassembly of sewer pipes, such as sewer pipes made of steel, concrete, ceramics, such as clay; or of a polymeric material, such as PVC.

In an embodiment of the tool according to the first aspect of the present invention the tool is configured for allowing adjusting, via said adjustment means, the mutual distance between the inner surface of the first fork element and the inner surface of the second fork element so as to correspond to the outer diameter of a pipe segment; when the pipe segment is having an outer diameter selected from the ranges: 40 - 400 mm, such as 60 - 350 cm, such as 80 - 300 mm, e.g. 100 - 250 mm, such as 150 - 200 mm.

In an embodiment of the tool according to the first aspect of the present invention the elongate shaft at its upper end comprises a handle.

A handle obviously improves handling of the tool.

In an embodiment of the tool according to the first aspect of the present invention each of the two fork elements at one of the sides or at both of the sides not facing the other fork element, nor facing away from the other fork element, comprises an array of indents arranged above one another.

In an embodiment of the tool according to the first aspect of the present invention the array of indents being arranged above one another, in respect of each fork element, comprises 5-30 indents, such as 10 - 25 indents, for example 15 - 20 indents.

In an embodiment of the tool according to the first aspect of the present invention each indent independently is having an extension in a vertical direction of 4 - 60 mm, such as 10 - 50 mm, for example 15 - 40 mm, such as 20 - 35 mm, for example 25 - 30 mm and/or each indent independently is having an extension in a horizontal direction of 4 - 60 mm, such as 10 - 50 mm, for example 15 - 40 mm, such as 20 - 35 mm, for example 25 - 30 mm Such indents serve the purpose of allowing engagement with a pipe holder of the invention as described below.

### The second aspect of the present invention

In a second aspect the present invention relates to a system for assembling and disassembling pipe segments, said system comprises a tool in combination with a pipe holder, said pipe holder in the orientation intended during use comprises:
a first jaw;
a second jaw;
an elongate pipe holder shaft;

wherein said first jaw and said second jaw are having a concave inner surface;
wherein said first jaw and said second jaw are being pivotally suspended in relation to each other around a pivot axis;
wherein said first jaw and said second jaw comprises a protrusion, at an upper end thereof, protruding in an upward direction;
wherein said pipe holder shaft comprising an upper end and a lower end;
wherein said pipe holder shaft, at a lower end thereof is being pivotally suspended relative to said first jaw and said second jaw;
wherein said pipe holder shaft, at a lower end thereof comprises a jaw engagement element;
wherein said jaw engagement element is configured to engage with said protrusion of said first jaw and said second jaw, respectively, at an engagement surface thereof; thereby enabling, by rotation of said pipe holder shaft, to shift the configuration of said pipe holder between a clamping configuration in which the first jaw and second jaw are relatively close to each other, and an open configuration, wherein the first jaw and second jaw are relatively distant to each other.

In an embodiment of the system according to the second aspect of the present invention the inner surface of said first jaw and said second jaw, respectively are being essentially cylindrical.

Such geometry improves the gripping ability of the jaws.

In an embodiment of the system according to the second aspect of the present invention the jaw engagement element is having a non-circular cross-section.

In an embodiment of the system according to the second aspect of the present invention the inner surface of the first jaw and/or the second jaw, respectively is provided with one or more friction pads for providing friction against the outer surface of a pipe.

In an embodiment of the system according to the second aspect of the present invention the friction pad(s) is/are being made of metal or a polymer, such as rubber.

In an embodiment of the system according to the second aspect of the present invention the pipe holder shaft comprises extension means, such as a telescopic extension means being able to shift the length of said pipe holder shaft between a relative short length and a relative long length and vice versa.

Such feature improves flexibility of the pipe holder during use and hence also improves ergonomics of the pipe holder.

In an embodiment of the system according to the second aspect of the present invention an outer surface of said first jaw and said second jaw is/are provided with a knob.

Such knob(s) serve(s) the purpose of allowing engagement with a tool of the invention as further described below.

In an embodiment of the system according to the second aspect of the present invention the pipe holder shaft at an upper end thereof comprises a handle.

A handle improves handling of the pipe holder.

### The third aspect not forming part of the present invention

The third aspect, which does not form part of the present invention, relates to a pipe holder wherein said pipe holder is comprising a combination of features as defined in respect of the second aspect of the present invention.

### The fourth aspect of the present invention

In a fourth aspect the present invention relates to a use of a tool according to the first aspect of the present invention or of a system according to the second aspect of the present invention in the operation of assembling or disassembling pipes, such as pipe segments.

The present invention in its various aspects provide for aiding the operation of assembling and disassembling pipe segments, such as sewer pipe segments being located in a trench in soil.

The tool and the system according to the first and the second aspect, respectively, of the present invention allows better handling of pipe or pipe segments in the operation of assembling or disassembling of these. Moreover, during such operations, the present invention in its various aspects allows an ergonomically healthier position of the body of a worker handling these pipes or pipe segments.

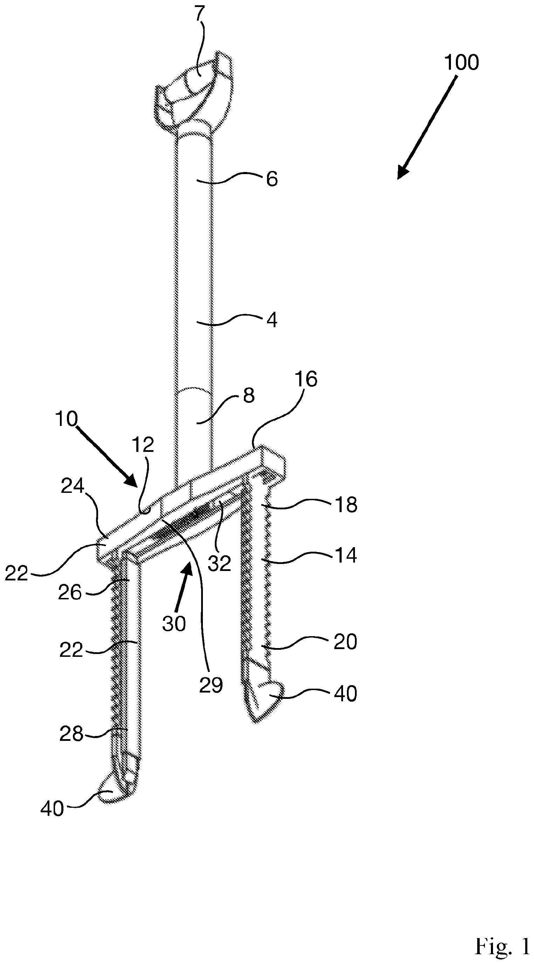

Referring now in detail to the drawings for the purpose of illustrating preferred embodiments of the present invention, Fig. 1 is a perspective view showing an embodiment of the tool according to the first aspect of the present invention.

Fig. 1 shows the tool 100. The tool comprises an elongate shaft 4 having an upper end 6 and a lower end 8. The lower end 8 of the shaft 4 is being connected to a fork portion 10.

From the fork base 12 a first fork element 14 extends in a downward direction, at a first side 16 thereof. The first fork element 14 comprises an upper end 18 and a lower end 20.

Likewise, at a second side 24 of the fork base 12, a second fork element 22 extends in a downward direction. The second fork element 22 comprises an upper end 26 and a lower end 28.

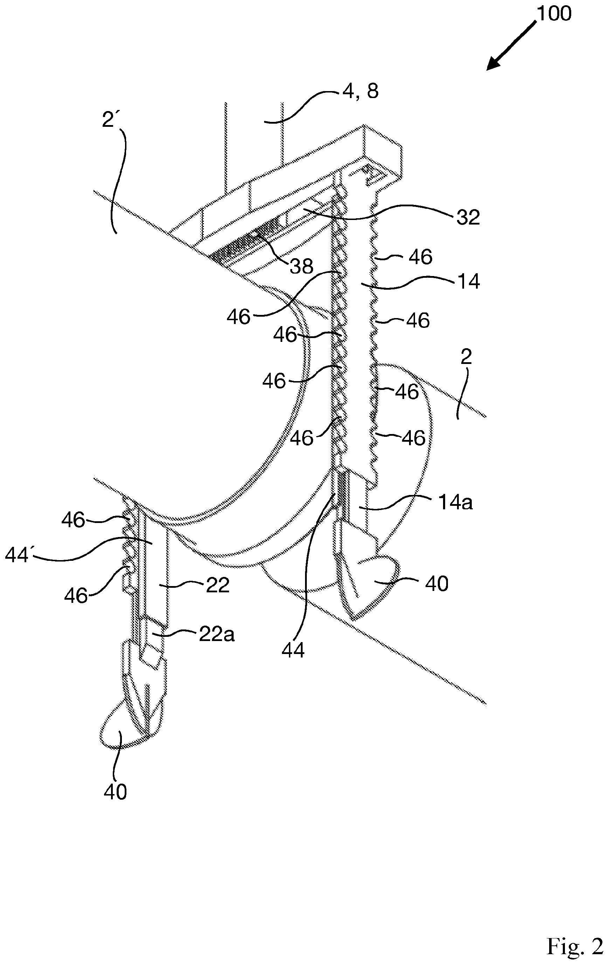

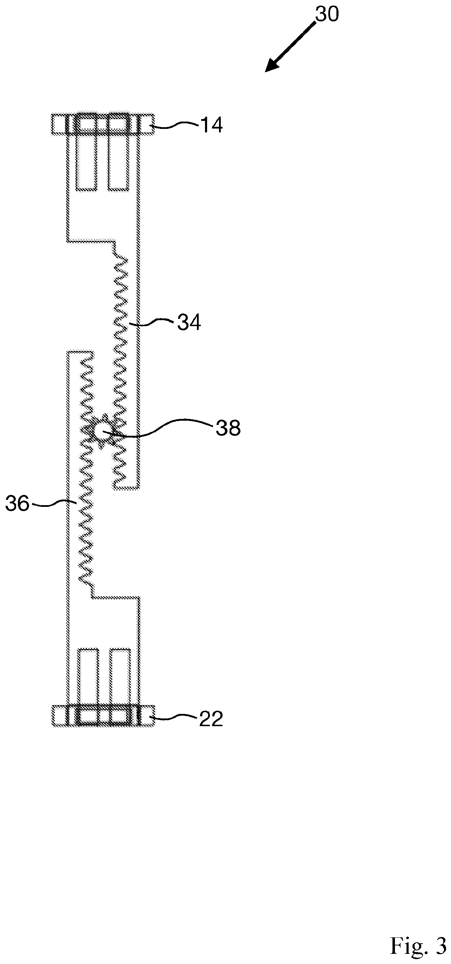

The tool 100, as will be explained in more detail in Fig. 2 and 3, moreover comprises adjustment means 30. The adjustment means 30 are provided for enabling adjusting the mutual distance between said first fork element 14 and said second fork element 22.

Fig. 1 also shows that each of the fork elements 14,22 comprises a wing portion 40 at a lower end thereof. The wing portion extends in a plane defined by the first fork element 14 and the second fork element 22.

The wing portions provides for establishing resistance against soil, when the fork elements 14,22 are dug into soil.

The lower portion 29 of the fork base comprises a slit defining part of the adjustment means 30.

Fig. 2 is a perspective view illustrating in close-up details of one embodiment of the tool of the first aspect of the present invention.

Fig. 2 shows that the first fork element 14 as well as the second fork element 22, at both of the sides not facing the other fork element, nor facing away from the other fork element, comprises an array of indents 46 arranged above one another.

The indents 46 are provided for entering into engagement of a knob of the pipe holder tool 200 as explained below.

The array of indents 46 being arranged above one another, in respect of each fork element 14,22 may comprise 5 - 30 indents, such as 10 - 25 indents, for example 15 - 20 indents.

Fig. 2 moreover shows that each fork element 14,22 is/are being hollow and accommodates an auxiliary fork element 14a,22a, wherein each auxiliary fork element 14a,22a is configured for being able to slide and lock into one of two or more predetermined positions in relation to its corresponding fork element 14,22.

The locking may be accomplished by providing a through-going treaded hole in the fork element. By screwing a screw, such as a wing screw into the treaded hole it is possible to lock the auxiliary fork element to its corresponding fork element.

Fig. 2 also shows that wing portions 40 are being arranged at a lower end of said an auxiliary fork element 14a,22a.

Fig. 3 is a bottom plan view illustrating the principle of the adjustment means 30 of the tool of the first aspect of the invention.

Fig. 3 shows the sprocket 38 being engaged into engagement with the first tooted rack 34 and the second toothed rack 36. It is also seen in Fig. 3 that the first fork element 14 is connected to the outer end of the first toothed rack 34. Likewise, the second fork element 22 is connected to the outer end of the second toothed rack 36.

In this arrangement, a turning of the sprocket 38 (as being effected by turning the shaft 4 of the tool) in a clockwise direction will imply a movement of the first toothed rack 34 and the second toothed rack 36, and thereby also of the first fork element 14 and the second fork element 22 towards each other.

On the contrary, a turning of the sprocket 38 in an anticlockwise direction will imply a movement of the first toothed rack 34 and the second toothed rack 36, and thereby also of the first fork element 14 and the second fork element 22 away from each other.

Accordingly, the arrangement of the adjustment means 30 shown in Fig. 3 allows for adjusting the mutual distance between the first fork element 14 and the second fork element 22.

The adjustment means 30 moreover comprises a slit 32 into which the first toothed rack 34, the second toothed rack 36, and the sprocket 38 are arranged.

The slit 32 is arranged in the fork base 12 at a lower part thereof. The slit 32 extends in a longitudinal direction thereof.

The shaft 4 is being pivotally connected to the fork base 12 in the sense that the shaft is able to rotate around its longitudinal axis. Moreover, the shaft 4 is being rigidly connected to the sprocket 38 which, as already mentioned, is being arranged in the slit 32.

The sprocket 38 is configured for engaging with the first toothed rack 34 and said second toothed rack 36 on either side of the sprocket.

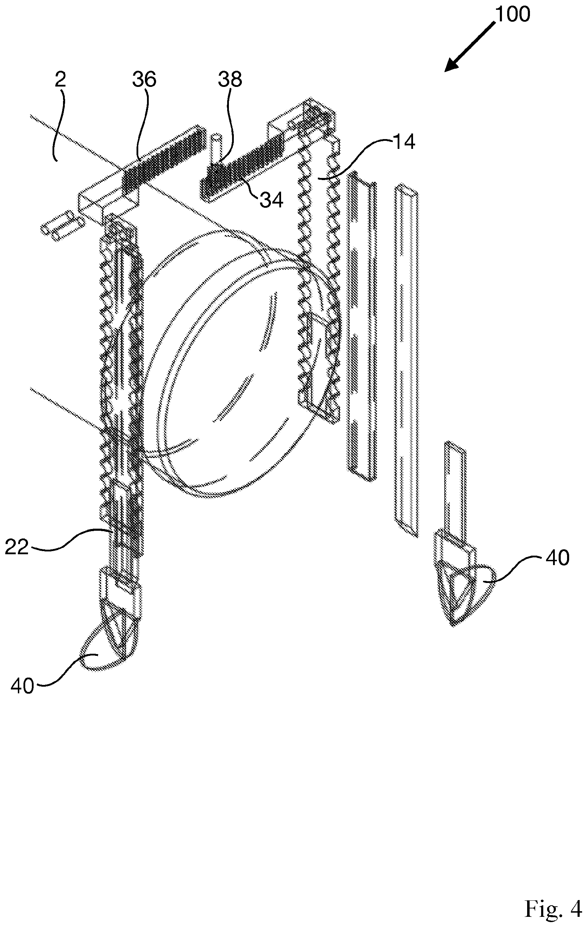

Fig. 4 is an exploded view illustrating elements and the principle of the adjustment means 30 of the tool of the first aspect of the invention.

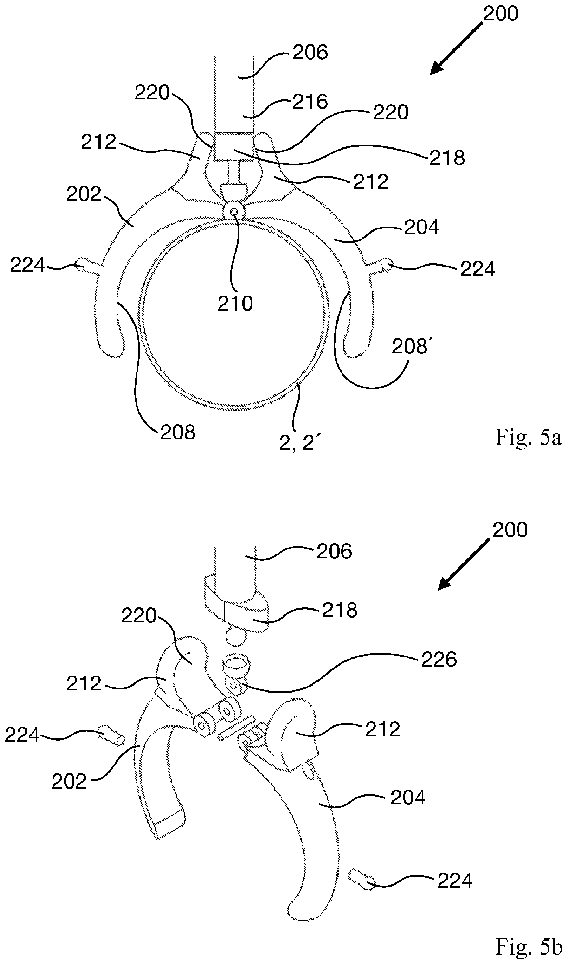

Fig. 5a is a perspective view illustrating a pipe holder 200 according to the third aspect, which does not form part of the present invention.

Fig. 5a shows the pipe holder 200 comprising a first jaw 202, a second jaw 204 and an elongate pipe holder shaft 206.

The first jaw 202 and the second jaw 204 are each having a concave inner surface 208,208' .

It can be seen in Fig. 5a that the first jaw 202 and the second jaw 204 are being pivotally suspended in relation to each other around a pivot axis 210.

Also seen is that the first jaw 202 and the second jaw 204 comprises a protrusion 212, arranged at an upper part thereof and protruding in an upward direction.

The pipe holder shaft 206 comprises an upper end 214 (not seen in Fig. 4a) and a lower end 216. The pipe holder shaft 206, at a lower end 216 thereof, is being pivotally suspended relative to the first jaw 202 and the second jaw 204.

Moreover, the pipe holder shaft 206 at a lower end 216 thereof comprises a jaw engagement element 218.

The jaw engagement element 218 is configured to engage with the protrusion 212 of said first jaw 202 and said second jaw 204, respectively, at an engagement surface 220 thereof; thereby enabling, by rotation of the pipe holder shaft, to shift the configuration of the pipe holder 200 between a clamping configuration in which the first jaw 202 and second jaw 204 are relatively close to each other, and an open configuration, wherein the first jaw 202 and second jaw 204 are relatively distant to each other.

Accordingly, the pipe holder 200 according to the third aspect, which does not form part of the present invention, allows, simply by turning the shaft 206 thereof, to make the first jaw 202 and the second jaw 204 clamp around a pipe or a pipe segment 2,2' with the purpose of handling such pipe or pipe segment.

It is seen in Fig. 5a that the outer surface of the first jaw 202 and the second jaw 204 are provided with a knob 224.

The knobs 224 are provided for entering into engagement with indents 46 of the fork elements 14,22 of the tool 100 of the first aspect.

Fig. 5b is an explosive view of the pipe holder 200 illustrated in Fig. 5a. It is seen that the pipe holder shaft 206 rotates in a connecting element 226 acting as a bearing.

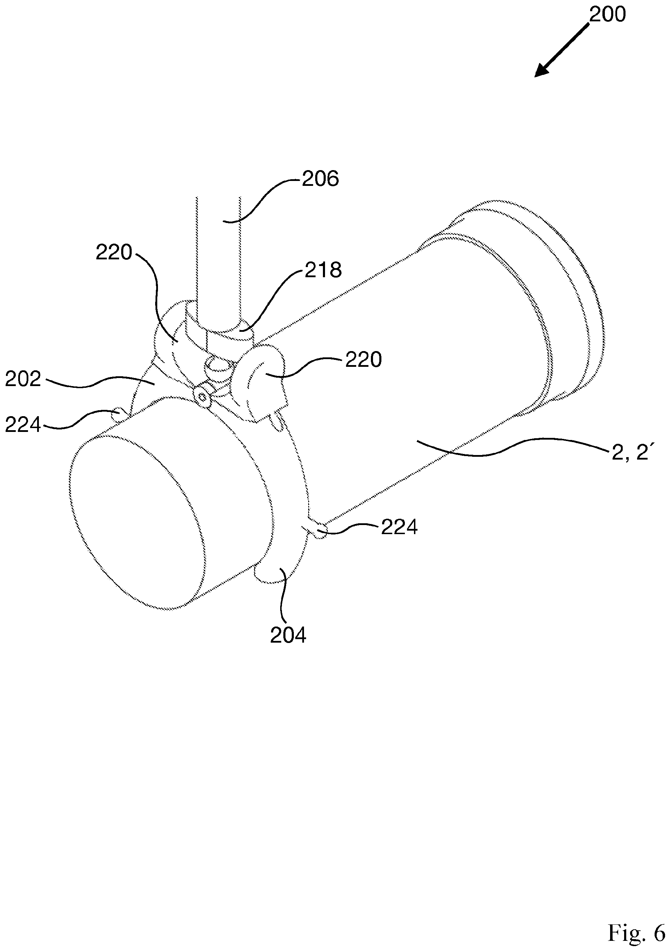

Fig. 6 is a perspective view illustrating the pipe holder 200 of Fig. 5a clamping around a pipe segment 2,2'.

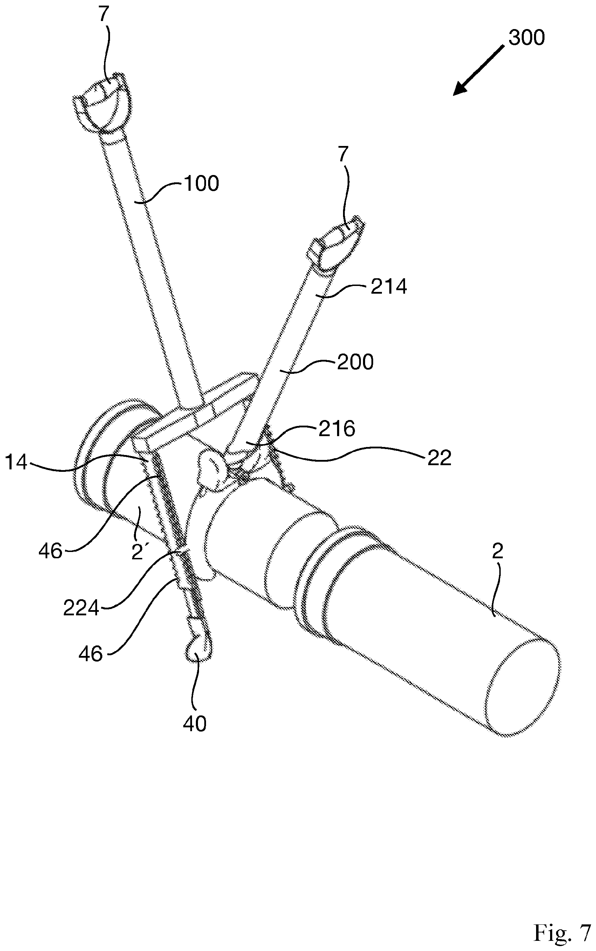

Fig. 7 is a perspective view illustrating the pipe holder of fig. 5a in a working operation in combination with the tool of fig. 1. The combination of the tool 100 and the pipe holder 200 makes up the system according to the second aspect of the present invention.

Fig. 7 showing the tool 100 and the piper holder 200 working together in such a way that the tool 100 engages with the ground in that the two fork elements 14,22 at least touches the ground. The two fork elements 14,22 may more efficiently be dug into the soil of the ground. The piper holder 200 on the other hand rests on the tool 100 in the sense that the knobs 224 of the pipe holder 200 are being suspended in associated indents 46 of the forks 14,22 of the tool 100.

In this way the tool 100 and the pipe holder 200 can be used in corporation in an operation where it is desired to press one pipe segment onto another pipe segment in order to construct a pipe line of a multiple of pipe segments. Alternatively, the tool 100 and the pipe holder 200 may also be used in the same way when disassembling a pipeline comprising a number of pipe segments.

It appears from the description above that the tool 100, the pipe holder 200 and the system 300 comprising the tool 100 and the pipe holder 200 are useful in handling pipe segments in the construction or disassembly of pipelines for sewer.

### List of reference numerals

- 2,2': Pipe segment
- 4: Elongate shaft
- 6: Upper end of shaft
- 7: Handle
- 8: Lower end of shaft
- 10: Fork portion
- 12: Fork base
- 14: First fork element
- 14a: First auxiliary fork element
- 16: First side of fork base
- 18: Upper end of first fork element
- 20: Lower end of first fork element
- 22: Second fork element
- 22a: Second auxiliary fork element
- 24: Second side of fork base
- 26: Upper end of second fork element
- 28: Lower end of second fork element
- 29: Lower portion of fork base
- 30: Adjustment means
- 32: Slit in fork base
- 34: First toothed rack
- 36: Second toothed rack
- 38: Sprocket
- 40: Wing portion
- 42,42': Inner surface of fork element
- 44,44': Pad arranged on inner surface of fork element
- 46: Indent
- 100: Tool
- 200: Pipe holder
- 202: First jaw
- 204: Second jaw
- 206: Pipe holder shaft
- 208,208': Inner surface of jaw
- 210: Pivot axis jaws
- 212: Protrusion of jaw
- 214: Upper end of pipe holder shaft
- 216: Lower end of pipe holder shaft
- 218: Jaw engagement element
- 220: Engagement surface of jaw
- 222: Friction pad of jaw
- 224: Knob of outer surface of jaw
- 226: Connecting element
- 300: System

## Claims

1. A tool (100) for assembling and disassembling pipe segments (2,2'), wherein said tool in the orientation intended during use comprising:
an elongate shaft (4) having an upper end (6) and a lower end (8);
wherein said lower end (8) of said shaft (4) is being connected to a fork portion (10);
wherein said fork portion comprises a fork base (12);
wherein a first fork element (14) extends in a downward direction from said fork base (12), at a first side (16) thereof; said first fork element comprises an upper end (18) and a lower end (20);
wherein a second fork element (22) extends in a downward direction from said fork base (12), at a second side (24) thereof; said second fork element comprises an upper end (26) and a lower end (28);
wherein said fork portion comprising adjustment means (30) for adjusting the mutual distance between said first fork element and said second fork element;
**characterized in that** said adjustment means (30) comprises:
a slit (32);
a first toothed rack (34),
a second toothed rack (36), and
a sprocket (38);
wherein said fork base (12) comprises said slit (32), at a lower portion (29) thereof and extending in a longitudinal direction thereof; and wherein said first fork element (14) being connected to said first toothed rack (34), said first toothed rack being configured to be able to slide in said slit (32); wherein said second fork element (22) being connected to said second toothed rack (36), said second toothed rack being configured to be able to slide in said slit (32); wherein said shaft (4) being pivotally connected to said fork base (12) and being rigidly connected to said sprocket (38); said sprocket being arranged in said slit (32); wherein said sprocket (38) is configured for engaging with said first toothed rack (34) and said second toothed rack (36);
thereby allowing translating a rotation of said shaft (4), in a first or a second rotational direction, into an increase or a decrease of the mutual distance between said first fork element (14) and said second fork element (22).

2. A tool (100) according to claim 1, wherein a lower end (20,28) of one or both of said fork elements (14,22) comprising a wing portion (40), said wing portion extending in a plane defined by said first fork element (14) and said second fork element (22);
and/or
wherein one or both of said fork elements (14,22) is/are being hollow and wherein each hollow fork element (14,22) accommodates an auxiliary fork element (14a,22a), wherein each an auxiliary fork element (14a,22a) is configured for being able to slide and lock into two or more predetermined positions in relation to its corresponding fork element (14,22), and wherein said wing portion is being arranged at a lower end of said an auxiliary fork element (14a,22a).

3. A tool (100) according to any of the claims 1 or 2, wherein said first fork element (14,14a) and/or second fork element (22,22a), at an inner surface (42,42') thereof, facing the other fork element, comprises one or more pads (44,44') for providing increased friction against the outer surface of a pipe segment (2,2');
wherein said pad(s) (44,44') optionally is/are being made of metal or a polymer, such as rubber.

4. A tool (100) according to any of the preceding claims, wherein the shaft (4) comprises extension means, such as a telescopic extension means being able to shift the length of said shaft between a relative short length and a relative long length and vice versa; and/or wherein said elongate shaft (4) at its upper end (6) comprises a handle (7).

5. A tool (100) according to any of the preceding claims, wherein said tool is configured for assembly and disassembly of sewer pipes, such as sewer pipes made of steel, concrete, ceramics, such as clay; or of a polymeric material, such as PVC.

6. A tool (100) according to any of the preceding claims, wherein each of the two fork elements (14,22) at one of the sides or at both of the sides not facing the other fork element, nor facing away from the other fork element, comprises an array of indents (46) arranged above one another.

7. A system (300) for assembling and disassembling pipe segments (2,2'), said system comprises a tool (100) according to any of the preceding claims in combination with a pipe holder (200), said pipe holder in the orientation intended during use comprises:
a first jaw (202);
a second jaw (204);
an elongate pipe holder shaft (206);
wherein said first jaw (202) and said second jaw (204) are having a concave inner surface (208,208');
wherein said first jaw (202) and said second jaw (204) are being pivotally suspended in relation to each other around a pivot axis (210);
wherein said first jaw (202) and said second jaw (204) comprises a protrusion (212), protruding in an upward direction;
wherein said pipe holder shaft (206) comprising an upper end (214) and a lower end (216);
wherein said pipe holder shaft (206), at a lower end (216) thereof is being pivotally suspended relative to said first jaw (202) and said second jaw (204);
wherein said pipe holder shaft, (206) at a lower end (216) thereof comprises a jaw engagement element (218);
wherein said jaw engagement element (218) is configured to engage with said protrusion (212) of said first jaw (202) and said second jaw (204), respectively, at an engagement surface (220) thereof; thereby enabling, by rotation of said pipe holder shaft, to shift the configuration of said pipe holder (200) between a clamping configuration in which the first jaw (202) and second jaw (204) are relatively close to each other, and an open configuration, wherein the first jaw (202) and second jaw (204) are relatively distant to each other.

8. A system (300) according to claim 7, wherein said inner surface (208,208') of said first jaw (202) and said second jaw (204), respectively are being essentially cylindrical.

9. A system (300) according to claim 7 or 8, wherein said jaw engagement element (218) is having a non-circular cross-section.

10. A system (300) according to any of the claims 7-9, wherein said inner surface (208,208') of said first jaw (202) and/or said second jaw (204), respectively is provided with one or more friction pads (222) for providing friction against the outer surface of a pipe (2,2'); wherein said friction pad(s) (222) optionally is/are being made of metal or a polymer, such as rubber.

11. A system (300) according to any of the claims 7 - 10, wherein the pipe holder shaft (206) comprises extension means, such as a telescopic extension means being able to shift the length of said pipe holder shaft between a relative short length and a relative long length and vice versa.

12. A system (300) according to any of the claims 7 - 11, wherein an outer surface of said first jaw (202) and said second jaw (204) is/are provided with a knob (224).

13. A system (300) according to any of the claims 7 - 12, wherein said pipe holder shaft (206) at an upper end (214) thereof comprises a handle (7).

14. Use of a tool (100) according to any of the claims 1 - 6 or of a system (300) according to any of the claims 7 - 13 in the operation of assembling or disassembling pipes, such as pipe segments.

## Patentansprüche

1. Werkzeug (100) zum Zusammenbauen und Zerlegen von Rohrsegmenten (2, 2'), wobei das Werkzeug in der während des Gebrauchs beabsichtigten Ausrichtung Folgendes umfasst:
einen länglichen Schaft (4), der ein oberes Ende (6) und ein unteres Ende (8) aufweist;
wobei das untere Ende (8) des Schafts (4) mit einem Gabelabschnitt (10) verbunden ist;
wobei der Gabelabschnitt eine Gabelbasis (12) umfasst;
wobei sich ein erstes Gabelelement (14) von der Gabelbasis (12) an einer ersten Seite (16) davon in einer Abwärtsrichtung erstreckt; wobei das erste Gabelelement ein oberes Ende (18) und ein unteres Ende (20) umfasst;
wobei sich ein zweites Gabelelement (22) von der Gabelbasis (12) an einer zweiten Seite (24) davon in einer Abwärtsrichtung erstreckt; wobei das zweite Gabelelement ein oberes Ende (26) und ein unteres Ende (28) umfasst;
wobei der Gabelabschnitt Einstellmittel (30) zum Einstellen des gegenseitigen Abstands zwischen dem ersten Gabelelement und dem zweiten Gabelelement umfasst;
**dadurch gekennzeichnet, dass** das Einstellmittel (30) Folgendes umfasst:
einen Schlitz (32);
eine erste Zahnstange (34),
eine zweite Zahnstange (36), und
ein Kettenrad (38);
wobei die Gabelbasis (12) den Schlitz (32) an einem unteren Abschnitt (29) davon und sich in einer Längsrichtung davon erstreckend umfasst; und wobei das erste Gabelelement (14) mit der ersten Zahnstange (34) verbunden ist, wobei die erste Zahnstange dazu konfiguriert ist, in der Lage zu sein, in dem Schlitz (32) zu gleiten; wobei das zweite Gabelelement (22) mit der zweiten Zahnstange (36) verbunden ist, wobei die zweite Zahnstange dazu konfiguriert ist, in der Lage zu sein, in dem Schlitz (32) zu gleiten; wobei der Schaft (4) schwenkbar mit der Gabelbasis (12) verbunden ist und starr mit dem Kettenrad (38) verbunden ist; wobei das Kettenrad in dem Schlitz (32) angeordnet ist; wobei das Kettenrad (38) zum Eingriff mit der ersten Zahnstange (34) und der zweiten Zahnstange (36) konfiguriert ist;
wodurch ein Umwandeln einer Drehung des Schafts (4), in eine erste oder eine zweite Drehrichtung, in eine Vergrößerung oder Verringerung des gegenseitigen Abstands zwischen dem ersten Gabelelement (14) und dem zweiten Gabelelement (22) ermöglicht wird.

2. Werkzeug (100) nach Anspruch 1, wobei ein unteres Ende (20,28) von einem oder beiden der Gabelelemente (14,22) einen Flügelabschnitt (40) umfasst, wobei sich der Flügelabschnitt in einer Ebene erstreckt, die durch das erste Gabelelement (14) und das zweite Gabelelement (22) definiert ist;
und/oder
wobei eines oder beide der Gabelelemente (14,22) hohl ist/sind und wobei jedes hohle Gabelelement (14,22) ein Hilfsgabelelement (14a,22a) unterbringt, wobei jedes Hilfsgabelelement (14a,22a) dazu konfiguriert ist, in der Lage zu sein, in Bezug auf sein entsprechendes Gabelelement (14,22) in zwei oder mehr vorbestimmte Positionen zu gleiten und einzurasten, und wobei der Flügelabschnitt an einem unteren Ende des Hilfsgabelelements (14a,22a) angeordnet ist.

3. Werkzeug (100) nach einem der Ansprüche 1 oder 2, wobei das erste Gabelelement (14,14a) und/oder das zweite Gabelelement (22,22a) an einer inneren Oberfläche (42,42') davon, die dem anderen Gabelelement zugewandt ist, einen oder mehrere Beläge (44,44') umfasst, um eine erhöhte Reibung gegen die äußere Oberfläche eines Rohrsegments (2,2') bereitzustellen; wobei der Belag/die Beläge (44,44') optional aus Metall oder einem Polymer, wie etwa Gummi, hergestellt ist/sind.

4. Werkzeug (100) nach einem der vorhergehenden Ansprüche, wobei der Schaft (4) Verlängerungsmittel umfasst, wie etwa ein teleskopisches Verlängerungsmittel, das in der Lage ist, die Länge des Schafts zwischen einer relativ kurzen Länge und einer relativ langen Länge und umgekehrt zu verschieben; und/oder wobei der längliche Schaft (4) an seinem oberen Ende (6) einen Griff (7) umfasst.

5. Werkzeug (100) nach einem der vorhergehenden Ansprüche, wobei das Werkzeug zum Zusammenbau und zur Zerlegung von Abwasserrohren konfiguriert ist, wie etwa Abwasserrohre aus Stahl, Beton, Keramik, wie Ton; oder aus einem polymeren Material, wie PVC.

6. Werkzeug (100) nach einem der vorhergehenden Ansprüche, wobei jedes der zwei Gabelelemente (14,22) an einer der Seiten oder an beiden Seiten, die nicht dem anderen Gabelelement zugewandt sind und auch nicht von dem anderen Gabelelement abgewandt sind, eine Anordnung von übereinander angeordneten Einschnitten (46) umfasst.

7. System (300) zum Zusammenbauen und Zerlegen von Rohrsegmenten (2,2'), wobei das System ein Werkzeug (100) nach einem der vorhergehenden Ansprüche in Kombination mit einem Rohrhalter (200) umfasst, wobei der Rohrhalter in der während des Gebrauchs beabsichtigten Ausrichtung Folgendes umfasst:
eine erste Backe (202);
eine zweite Backe (204);
einen länglichen Rohrhalterschaft (206);
wobei die erste Backe (202) und die zweite Backe (204) eine konkave innere Oberfläche (208,208') aufweisen;
wobei die erste Backe (202) und die zweite Backe (204) in Bezug zueinander um eine Schwenkachse (210) schwenkbar aufgehängt sind;
wobei die erste Backe (202) und die zweite Backe (204) einen Vorsprung (212) umfassen, der in einer Aufwärtsrichtung vorsteht;
wobei der Rohrhalterschaft (206) ein oberes Ende (214) und ein unteres Ende (216) umfasst;
wobei der Rohrhalterschaft (206) an einem unteren Ende (216) davon relativ zu der ersten Backe (202) und der zweiten Backe (204) schwenkbar aufgehängt ist;
wobei der Rohrhalterschaft (206) an einem unteren Ende (216) davon ein Backeneingriffselement (218) umfasst;
wobei das Backeneingriffselement (218) dazu konfiguriert ist, mit dem Vorsprung (212) der ersten Backe (202) beziehungsweise der zweiten Backe (204) an einer Eingriffsfläche (220) davon in Eingriff zu kommen; wodurch es durch Drehung des Rohrhalterschafts ermöglicht wird, die Konfiguration des Rohrhalters (200) zwischen einer Klemmkonfiguration, in der die erste Backe (202) und die zweite Backe (204) relativ nahe beieinander sind, und einer offenen Konfiguration, in der die erste Backe (202) und die zweite Backe (204) relativ weit voneinander entfernt sind, zu verschieben.

8. System (300) nach Anspruch 7, wobei die innere Oberfläche (208,208') der ersten Backe (202) beziehungsweise der zweiten Backe (204) im Wesentlichen zylindrisch sind.

9. System (300) nach Anspruch 7 oder 8, wobei das Backeneingriffselement (218) einen nicht kreisförmigen Querschnitt aufweist.

10. System (300) nach einem der Ansprüche 7 - 9, wobei die innere Oberfläche (208,208') der ersten Backe (202) und/oder der zweiten Backe (204) jeweils mit einem oder mehreren Reibbelägen (222) zum Bereitstellen von Reibung gegen die äußere Oberfläche eines Rohrs (2,2') versehen ist; wobei der Reibungsbelag/die Reibungsbeläge (222) optional aus Metall oder einem Polymer, wie etwa Gummi, hergestellt ist/sind.

11. System (300) nach einem der Ansprüche 7 - 10, wobei der Rohrhalterschaft (206) Verlängerungsmittel umfasst, wie etwa ein teleskopisches Verlängerungsmittel, das in der Lage ist, die Länge des Rohrhalterschafts zwischen einer relativ kurzen Länge und einer relativ langen Länge und umgekehrt zu verschieben.

12. System (300) nach einem der Ansprüche 7 - 11, wobei eine äußere Oberfläche der ersten Backe (202) und der zweiten Backe (204) mit einem Knopf (224) versehen ist/sind.

13. System (300) nach einem der Ansprüche 7 - 12, wobei der Rohrhalterschaft (206) an einem oberen Ende (214) davon einen Griff (7) umfasst.

14. Verwendung eines Werkzeugs (100) nach einem der Ansprüche 1 - 6 oder eines Systems (300) nach einem der Ansprüche 7 - 13 beim Vorgang eines Zusammenbauens oder Zerlegens von Rohren, wie etwa Rohrsegmenten.

## Revendications

1. Outil (100) destiné à l'assemblage et au désassemblage de segments de tuyau (2, 2'), ledit outil dans l'orientation prévue durant l'utilisation comprenant :
un arbre allongé (4) possédant une extrémité supérieure (6) et une extrémité inférieure (8) ;
ladite extrémité inférieure (8) dudit arbre (4) étant reliée à une partie fourche (10) ;
ladite partie fourche comprenant une base de fourche (12) ;
un premier élément de fourche (14) s'étendant dans une direction vers le bas à partir de ladite base de fourche (12), sur un premier côté (16) de celle-ci ; ledit premier élément de fourche comprend une extrémité supérieure (18) et une extrémité inférieure (20) ;
un second élément de fourche (22) s'étendant dans une direction vers le bas à partir de ladite base de fourche (12), sur un second côté (24) de celle-ci ; ledit second élément de fourche comprend une extrémité supérieure (26) et une extrémité inférieure (28) ;
ladite partie fourche comprenant un moyen de réglage (30) destiné à régler la distance mutuelle entre ledit premier élément de fourche et ledit second élément de fourche ;
**caractérisé en ce que** ledit moyen de réglage (30) comprend :
une fente (32) ;
une première crémaillère (34),
une seconde crémaillère (36), et
un pignon (38) ;
ladite base de fourche (12) comprenant ladite fente (32), au niveau d'une partie inférieure (29) de celle-ci et s'étendant dans une direction longitudinale de celle-ci ; et ledit premier élément de fourche (14) étant relié à ladite première crémaillère (34), ladite première crémaillère étant conçue pour être capable de coulisser dans ladite fente (32) ; ledit second élément de fourche (22) étant relié à ladite seconde crémaillère (36), ladite seconde crémaillère étant conçue pour être capable de coulisser dans ladite fente (32) ; ledit arbre (4) étant relié de manière pivotante à ladite base de fourche (12) et étant relié de manière rigide audit pignon (38) ; ledit pignon étant agencé dans ladite fente (32) ; ledit pignon (38) étant conçu pour venir se mettre en prise avec ladite première crémaillère (34) et ladite seconde crémaillère (36) ;
permettant ainsi de convertir une rotation dudit arbre (4), dans un premier ou un deuxième sens de rotation, en une augmentation ou une diminution de la distance mutuelle entre ledit premier élément de fourche (14) et ledit second élément de fourche (22).

2. Outil (100) selon la revendication 1, une extrémité inférieure (20, 28) de l'un ou des deux des éléments de fourche (14, 22) comprenant une partie aile (40), ladite partie aile s'étendant dans un plan défini par ledit premier élément de fourche (14) et ledit second élément de fourche (22) ; et/ou
l'un ou les deux desdits éléments de fourche (14, 22) étant creux et chaque élément de fourche creux (14, 22) recevant un élément de fourche auxiliaire (14a, 22a), chaque élément de fourche auxiliaire (14a, 22a) étant conçu pour être capable de coulisser et de se verrouiller dans deux positions prédéfinies, ou plus, par rapport à son élément de fourche correspondant (14, 22), et ladite partie aile étant agencée au niveau d'une extrémité inférieure dudit élément de fourche auxiliaire (14a, 22a).

3. Outil (100) selon l'une quelconque des revendications 1 ou 2, ledit premier élément de fourche (14, 14a) et/ou ledit second élément de fourche (22, 22a), au niveau d'une surface interne (42, 42') de ceux-ci, faisant face l'autre élément de fourche, comprenant un ou plusieurs patins (44, 44') destinés à fournir un frottement accru contre la surface externe d'un segment de tuyau (2, 2') ;
ledit ou lesdits patins (44, 44') étant éventuellement constitués de métal ou de polymère, tel que du caoutchouc.

4. Outil (100) selon l'une quelconque des revendications précédentes, ledit arbre (4) comprenant un moyen d'extension, tel qu'un moyen d'extension télescopique pouvant changer la longueur dudit arbre entre une longueur relativement courte et une longueur relativement longue et vice-versa ; et/ou ledit arbre allongé (4) comprenant au niveau de son extrémité supérieure (6) une poignée (7).

5. Outil (100) selon l'une quelconque des revendications précédentes, ledit outil étant conçu pour l'assemblage et le désassemblage de tuyaux d'égout, tels que des tuyaux d'égout constitués d'acier, de béton, de céramique, telle que de l'argile ; ou d'un matériau polymère, tel que le PVC.

6. Outil (100) selon l'une quelconque des revendications précédentes, chacun des deux éléments de fourche (14, 22) sur l'un des côtés ou sur les deux des côtés ne faisant pas face à l'autre élément de fourche, ni tournant le dos à l'autre élément de fourche élément, comprenant un ensemble d'échancrures (46) agencées les unes au-dessus des autres.

7. Système (300) destiné à l'assemblage et au désassemblage des segments de tuyau (2, 2'), ledit système comprenant un outil (100) selon l'une quelconque des revendications précédentes en combinaison avec un support de tuyau (200), ledit support de tuyau dans l'orientation prévue durant l'utilisation comprend :
une première mâchoire (202) ;
une seconde mâchoire (204) ;
un arbre allongé (206) de support de tuyau ;
ladite première mâchoire (202) et ladite seconde mâchoire (204) possédant une surface interne concave (208, 208') ;
ladite première mâchoire (202) et ladite seconde mâchoire (204) étant suspendues de façon pivotante l'une par rapport à l'autre autour d'un axe de pivotement (210) ;
ladite première mâchoire (202) et ladite seconde mâchoire (204) comprenant une saillie (212), faisant saillie dans une direction vers le haut ;
ledit arbre (206) de support de tuyau comprenant une extrémité supérieure (214) et une extrémité inférieure (216) ;
ledit arbre (206) de support de tuyau, au niveau d'une extrémité inférieure (216) de celui-ci étant suspendu de manière pivotante par rapport à ladite première mâchoire (202) et à ladite seconde mâchoire (204) ;
ledit arbre (206) de support de tuyau au niveau d'une extrémité inférieure (216) de celui-ci comprenant un élément de mise en prise (218) de mâchoire ;
ledit élément de mise en prise (218) de mâchoire étant conçu pour se mettre en prise avec ladite saillie (212) de ladite première mâchoire (202) et de ladite seconde mâchoire (204), respectivement, au niveau d'une surface de mise en prise (220) de celle-ci ; permettant ainsi, par rotation dudit arbre de support de tuyau, de changer la configuration dudit support de tuyau (200) entre une configuration de serrage dans laquelle la première mâchoire (202) et la seconde mâchoire (204) sont relativement proches l'une de l'autre, et une configuration ouverte, dans laquelle la première mâchoire (202) et la seconde mâchoire (204) sont relativement éloignées l'une de l'autre.

8. Système (300) selon la revendication 7, ladite surface interne (208, 208') de ladite première mâchoire (202) et de ladite seconde mâchoire (204), respectivement, étant essentiellement cylindriques.

9. Système (300) selon la revendication 7 ou 8, ledit élément de mise en prise (218) de mâchoire possédant une section transversale non circulaire.

10. Système (300) selon l'une quelconque des revendications 7 à 9, ladite surface interne (208, 208') de ladite première mâchoire (202) et/ou de ladite seconde mâchoire (204), respectivement, étant dotées d'un ou plusieurs patins de frottement (222) destinés à fournir un frottement contre la surface externe d'un tuyau (2, 2') ; ledit ou lesdits patins de frottement (222) étant éventuellement constitués de métal ou de polymère, tel que du caoutchouc.

11. Système (300) selon l'une quelconque des revendications 7 à 10, ledit arbre (206) de support de tuyau comprenant un moyen d'extension, tel qu'un moyen d'extension télescopique capable de changer la longueur dudit arbre de support de tuyau entre une longueur relativement courte et une longueur relativement longue et vice versa.

12. Système (300) selon l'une quelconque des revendications 7 à 11, une surface externe de ladite première mâchoire (202) et de ladite seconde mâchoire (204) étant dotée d'un bouton (224).

13. Système (300) selon l'une quelconque des revendications 7 à 12, ledit arbre (206) de support de tuyau au niveau d'une extrémité supérieure (214) de celui-ci comprenant une poignée (7).

14. Utilisation d'un outil (100) selon l'une quelconque des revendications 1 à 6 ou d'un système (300) selon l'une quelconque des revendications 7 à 13 dans l'opération d'assemblage ou de désassemblage de tuyaux, tels que des segments de tuyau.
